# EUROPEAN PATENT SPECIFICATION

(11) **EP 4 550 912 B1**
(45) Date of publication and mention of the grant of the patent: **21.10.2026**
(21) Application number: 23849270.6
(22) Date of filing: 27.07.2023
(51) Int. Cl.: H04L 5/00, H04W 72/04, H04W 72/232

(54) **CHANNEL DETECTION METHOD AND APPARATUS, AND TERMINAL, NETWORK DEVICE AND STORAGE MEDIUM**
KANALDETEKTIONSVERFAHREN UND -VORRICHTUNG SOWIE ENDGERÄT, NETZWERKVORRICHTUNG UND SPEICHERMEDIUM
PROCÉDÉ ET APPAREIL DE DÉTECTION DE CANAL, ET TERMINAL, DISPOSITIF DE RÉSEAU ET SUPPORT DE STOCKAGE

(30) Priority: 04.08.2022 CN 202210933593
(43) Date of publication of application: 07.05.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: QIN, Wei, Beijing 100053 (CN); YANG, Tuo, Beijing 100053 (CN); HU, Lijie, Beijing 100053 (CN)
(74) Representative: Novagraaf Technologies
(86) International application number: PCT/CN2023/109667
(87) International publication number: WO 2024/027562

(56) References cited:
- WO-A1-2021/206422
- WO-A1-2021/206422
- CN-A- 113 473 634
- US-A1- 2019 268 889
- US-A1- 2023 144 002
- QUALCOMM INCORPORATED: "Multi-cell PUSCH/PUSCH scheduling with a single DCI", 3GPP DRAFT; R1-2205051, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20220509 - 20220520, 29 April 2022 (2022-04-29), Mobile Competence Centre ; 650, route des Lucioles ; F-06921 Sophia-Antipolis Cedex ; France, XP052191713

## Description

### CROSS-REFERENCE TO RELATED APPLICATION

This application is filed based on and claims priority to Chinese patent application No. 202210933593.1 filed on August 4, 2022.

### TECHNICAL FIELD

The disclosure relates to wireless technologies, and in particular to a method and apparatus for channel monitoring, a terminal, a network device, and a storage medium. Relevant background is known from WO 2021/206422 A1 and US 2019/268889 A1.

### BACKGROUND

In order to improve spectrum utilization, a mechanism of scheduling uplink and/or downlink channels for multiple cells by using a single downlink control information (DCI) format has been introduced. As a result, the method in the related art for determining indexes of control channel elements (CCEs) occupied by physical downlink control channel (PDCCH) candidates by using a carrier indicator field (CIF) becomes inapplicable in cross-carrier scheduling scenarios.

### SUMMARY

To address the problems in the related art, embodiments of the disclosure provide a method and apparatus for channel monitoring, a terminal, a network device, and a storage medium. The invention is set out in the appended set of claims.

According to the method and apparatus for channel monitoring, the terminal, the network device, and the storage medium provided in the embodiments of the disclosure, the first DCI is capable of simultaneously scheduling uplink and/or downlink channels for at least two cells. For the first DCI scheduling the first cell combination, the terminal determines the indexes of the CCEs occupied by the PDCCH candidates corresponding to the first DCI based on the carrier indication value configured for the first cell combination by the network side. In the above solution, DCI is capable of simultaneously scheduling uplink and/or downlink channels for at least two cells, and the terminal determines indexes of CCEs occupied by PDCCH candidates corresponding to the DCI, based on the carrier indication value configured by the network side for each cell combination that the DCI is capable of scheduling. In this way, in the cross-carrier scheduling scenarios, the value of n_CI for calculating indexes of CCEs is configured by the network side, and is related to the cell combination actually scheduled by the DCI, and the value of n_CI no longer refers to the value of CIF. Therefore, in a case that single DCI is capable of simultaneously scheduling at least two cells, the indexes of the CCEs are calculated effectively, and time-frequency resources occupied by the PDCCH candidates corresponding to the DCI are determined.

### BRIEF DESCRIPTION OF THE DRAWINGS

FIG. 1 is a schematic flowchart of a method for channel monitoring according to an embodiment of the disclosure;
FIG. 2 is a schematic flowchart of another method for channel monitoring according to an embodiment of the disclosure;
FIG. 3 is a schematic structural diagram of an apparatus for channel monitoring according to an embodiment of the disclosure not covered by the present invention;
FIG. 4 is a schematic structural diagram of another apparatus for channel monitoring according to an embodiment of the disclosure not covered by the present invention;
FIG. 5 is a schematic structural diagram of a terminal according to an embodiment of the disclosure; and
FIG. 6 is a schematic structural diagram of a network device according to an embodiment of the disclosure.

### DETAILED DESCRIPTION

During a PDCCH blind detection process, a terminal first needs to obtain time-frequency domain information and aggregation level of the PDCCH through the configuration of control resource set (CORESET) and search space. Then, the terminal needs to determine indexes of CCEs occupied by PDCCH candidates in a corresponding search space set. Next, based on a mapping of indexes of CCEs to resource element group (REG) bundles, positions of physical resources are determined. Subsequently, the PDCCH blind detection is performed.

For a search space set s associated with CORESET *p*, indexes of CCEs occupied by PDCCH candidates corresponding to aggregation level *L* are calculated by the following formula: $L ⋅ \left\{\left({Y}_{p , {n}_{s , f}^{μ}}+\left⌊\frac{{m}_{s , {n}_{CI} ⋅ {N}_{CCE , p}}}{L ⋅ {M}_{s , max}^{\left(L\right)}}\right⌋+{n}_{CI}\right)mod\left⌊{N}_{CCE , p}/L\right⌋\right\} + i$ (1)

Herein for *n_{CI}* in the formula, if cross-carrier scheduling is configured, the network configures CIF for the terminal through higher-layer signaling *CrossCarrierSchedulingConfig,* and *n_{CI}* is the value of CIF, ensuring that PDCCH candidates scheduling different carriers occupy non-overlapping CCEs as much as possible; if cross-carrier scheduling is not configured, i.e., in a case of carrier self-scheduling and for the common search space (CSS), the value of *n_{CI}* is 0. Furthermore, ${m}_{s , {n}_{CI}} = 0 , ⋯ , {M}_{s , {n}_{CI}}^{\left(L\right)} - 1$ , and ${M}_{s , {n}_{CI}}^{\left(L\right)}$ is a number of PDCCH candidates with aggregation level *L* in the search space given by the cell corresponding to *n_{CI}* monitored by the terminal. ${M}_{s , max}^{\left(L\right)}$ is a maximum value among ${M}_{s , {n}_{CI}}^{\left(L\right)}$ corresponding to all *n_{CI}* for aggregation level *L.*

In the related art, a single DCI format is only configured to schedule a single cell, with CIF indicating the scheduled cell corresponding to the PDCCH candidate. With the reassignment of 4G spectrum, fragmented frequency bands available for 5G will increase. In order to improve spectrum utilization, a mechanism that a single DCI format schedules uplink and/or downlink channels for multiple cells has been introduced. As a result, the CIF fields need to be redesigned, and the method for calculating indexes of CCEs based on CIF may no longer be applicable.

Based on this, according to the disclosure, the first DCI is capable of simultaneously scheduling uplink and/or downlink channels for at least two cells. For the first DCI scheduling the first cell combination, the terminal determines the indexes of the CCEs occupied by the PDCCH candidates corresponding to the first DCI based on the carrier indication value configured for the first cell combination by the network side. In the above solution, DCI is capable of simultaneously scheduling uplink and/or downlink channels for at least two cells, and the terminal determines indexes of CCEs occupied by PDCCH candidates corresponding to the DCI based on the carrier indication value configured by the network side for each cell combination that the DCI is capable of scheduling. In this way, in the cross-carrier scheduling scenarios, the value of *n_{CI}* for calculating indexes of CCEs is configured by the network side and is related to the cell combination actually scheduled by the DCI, and the value of *n_{CI}* no longer refers to the value of CIF. Therefore, in a case that single DCI is capable of simultaneously scheduling at least two cells, the indexes of the CCEs are calculated effectively, and time-frequency resources occupied by the PDCCH candidates corresponding to the DCI are determined.

A further detailed description of the disclosure is provided below in combination with the drawings and embodiments.

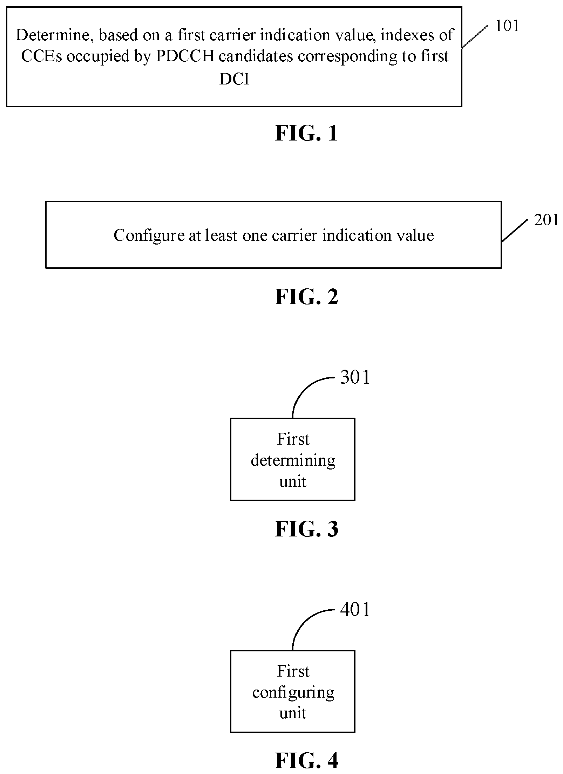

An embodiment of the disclosure provides a method for channel monitoring, applied to a terminal, as shown in FIG. 1, and the method includes the following operation 101.

At operation 101, based on a first carrier indication value, indexes of control channel elements (CCEs) occupied by physical downlink control channel (PDCCH) candidates corresponding to first downlink control information (DCI) are determined.

Herein the first DCI represents DCI that is capable of simultaneously scheduling uplink and/or downlink channels for at least two cells; the first carrier indication value represents a carrier indication value configured for a first cell combination by a network device; and the first cell combination is a cell combination scheduled by the first DCI.

In scenarios where single DCI is capable of simultaneously scheduling uplink and/or downlink channels for at least two cells, the first DCI is capable of simultaneously scheduling one or more cells. The one or more cells scheduled simultaneously by the first DCI are referred to as a cell combination. For example, the first DCI may simultaneously schedule up to 3 cells: cell#1, cell#2, and cell#3. The first DCI may actually schedule one or more of the 3 cells on each occasion. That is, the cell combinations that the first DCI is capable of scheduling may include seven cell combinations: (cell#1), (cell#2), (cell#3), (cell#1, cell#2), (cell#1, cell#3), (cell#2, cell#3), and (cell#1, cell#2, cell#3). For each cell combination that the first DCI is capable of scheduling, the network side configures a corresponding carrier indication value and transmits the carrier indication value to the terminal through downlink signaling, for example, by carrying the carrier indication value through radio resource control (RRC) signaling or the first DCI. The terminal calculates indexes of CCEs occupied by corresponding PDCCH candidates based on the carrier indication value configured by the network side for the cell combination actually scheduled by the first DCI.

Herein the carrier indication value may be understood as *n_{CI}* in the formula above. Therefore, after determining the first carrier indication value corresponding to the first cell combination, the terminal may calculate indexes of CCEs occupied by PDCCH candidates corresponding to the first DCI based on the formula above. That is, the terminal determines positions of the CCEs occupied by the PDCCH candidates corresponding to the first DCI. In this way, in cross-carrier scheduling scenarios, the indexes of the CCEs are calculated effectively, thereby determining time-frequency resources occupied by the PDCCH candidates corresponding to DCI that simultaneously schedules multiple cells.

In practical applications, for cell combinations that the first DCI is capable of scheduling, the configuration of at least one carrier indication value by the network side may include, but is not limited to, the following schemes 1 to 3.

### Scheme 1

In an embodiment, any cell combination that the first DCI is capable of scheduling is configured with the first carrier indication value.

In scheme 1, regardless of which cell combination the first DCI actually schedules, the network side configures the same first carrier indication value for the terminal to calculate indexes of CCEs to determine positions of the CCEs occupied by PDCCH candidates. That is, the corresponding carrier indication value configured for each cell combination is the same, and the value of the carrier indication value is not related to the CIF or information about at least one dynamically indicated scheduled cell. For example, the network side may configure *n_{CI}=*0*,* or configure the value of *n_{CI}* to be different from the value of *n_{CI}* used for the cell index during single-cell scheduling. Herein the carrier indication value is fixed, which means that for different cell combinations actually scheduled by the first DCI, the network side configures a same number of PDCCH candidates, and the time-frequency resources occupied by the PDCCH candidates that the terminal needs to monitor are the same. Furthermore, in the formula above, the value of ${M}_{s , {n}_{CI}}^{\left(L\right)}$ for calculating indexes of CCEs is also the same.

In practical applications, the first carrier indication value is fixed. Therefore, after the terminal accesses a base station, the base station may transmit the first carrier indication value to the terminal through RRC signaling, or the base station may transmit the first carrier indication value through media access control-control element (MAC-CE) signaling or DCI signaling. Although at least one actually scheduled cell may have different combinations, in scheme 1, indexes of CCEs are calculated based on the same carrier indication value, the numbers of PDCCH candidates are the same. In this way, the time-frequency resources occupied by the PDCCH candidates are determined. For scheme 1, the configuration manner is simple, the computational complexity is low, and the process of determining the time-frequency resources occupied by the PDCCH candidates is not affected by the information about the at least one dynamically indicated scheduled cell. Especially when single DCI may schedule a large number of cells, use of the scheme 1 ensures that the calculation complexity of indexes of CCEs is not affected.

Furthermore, the network side may further configure different carrier indication values for different cell combinations actually scheduled by the first DCI. Herein the first carrier indication value is determined from a first parameter set.

Herein the first parameter set includes at least two different carrier indication values configured by the network side.

### Scheme 2

In an embodiment, each carrier indication value in the first parameter set corresponds to a respective cell combination that the first DCI is capable of scheduling.

In the embodiment, PDCCH candidates corresponding to each cell combination that is capable of being scheduled occupies non-overlapping indexes of CCEs. Multiple different carrier indication values configured by the network side and cell combinations that are capable of being scheduled have a one-to-one correspondence. The terminal needs to select a carrier indication value corresponding to the actually scheduled cell combination from the multiple different carrier indication values configured by the network side, for calculating indexes of CCEs. In scheme 2, for different cell combinations that are capable of being scheduled, the terminal may need to monitor different PDCCH candidates. Furthermore, since the PDCCH candidates corresponding to different cell combinations occupy non-overlapping indexes of CCEs, it may be understood that the numbers ${M}_{s , {n}_{CI}}^{\left(L\right)}$ of PDCCH candidates corresponding to different cell combinations may be the same or different.

In practical applications, the first carrier indication value may be transmitted by the base station through MAC-CE signaling or DCI signaling.

Referring to the example above, the cell combinations that are capable of being scheduled include: (cell#1), (cell#2), (cell#3), (cell#1, cell#2), (cell#1, cell#3), (cell#2, cell#3), and (cell#1, cell#2, cell#3). Therefore, a corresponding first parameter set configured by the network side includes 7 carrier indication values with different values, each corresponding to a respective one of the above 7 cell combinations. During the PDCCH blind detection process, the terminal first determines the carrier indication value corresponding to the actually scheduled cell combination from the first parameter set, and then calculates indexes of CCEs based on the determined carrier indication value, thereby determining the indexes of the CCEs occupied by the PDCCH candidates.

Compared to the scheme 1, the scheme 2 is more suitable for configuring different PDCCH candidates for different cell combinations that are capable of being scheduled. This ensures that when different cell combinations are scheduled, the corresponding PDCCH candidates do not occupy overlapping CCEs as much as possible, thereby achieving flexible utilization of time-frequency resources. In contrast, the scheme 1 considers the monitoring capability of the terminal and is suitable for scenarios where the number of PDCCH candidates and the budget number of non-overlapping CCEs are limited during blind detection. Especially when a maximum number of cells that the DCI is capable of scheduling increases, a number of cell combinations that are capable of being scheduled is larger, and PDCCH candidates corresponding to different cell combinations need to occupy more overlapping CCEs, otherwise PDCCH blocking rate may be increased. In these scenarios, it is more reasonable to adopt the scheme 1.

### Scheme 3

In an embodiment, each carrier indication value in the first parameter set corresponds to at least two cell combinations that the first DCI is capable of scheduling, and cell combinations configured with a same carrier indication value have a same number of cells.

In the scheme 3, the network side configures multiple different carrier indication values, and cell combinations including a same number of cells are configured with a same carrier indication value. That is to say, the carrier indication value corresponding to the actually scheduled cell combination is determined based on a number of cells in the actually scheduled cell combination. It may be understood that a number of carrier indication values in the first parameter set is the same as a maximum number of cells corresponding to the cell combinations. In this way, for different cell combinations that are capable of being scheduled, the terminal may monitor the same or different PDCCH candidates.

In practical applications, the first carrier indication value may be transmitted by the base station through MAC-CE signaling or DCI signaling.

Furthermore, after determining the corresponding indexes of the CCEs based on the number of cells in the cell combination, the actually scheduled cell combination may be further determined based on related information. In an embodiment, the method further includes the following operation.

Based on a carrier indicator field (CIF) or first signaling, the first cell combination is determined from at least two cell combinations configured with the first carrier indication value.

Herein the first signaling is configured to indicate at least one scheduled cell.

In practical applications, there may be multiple cell combinations with the same carrier indication value. In a case that there are multiple cell combinations corresponding to the determined carrier indication value, the actually scheduled cell combination may be further determined from the multiple cell combinations through the CIF or scheduled cell indication signaling.

Referring to the example above, the cell combinations that are capable of being scheduled include: (cell#1), (cell#2), (cell#3), (cell#1, cell#2), (cell#1, cell#3), (cell#2, cell#3), and (cell#1, cell#2, cell#3). Therefore, each of these cell combinations includes one, or two, or three cells. Based on the number of cells in these cell combinations, the network side configures three carrier indication values. For example, a carrier indication value of 0 corresponds to cell combinations with 1 cell, i.e., three cell combinations: (cell#1), (cell#2), and (cell#3). A carrier indication value of 1 corresponds to cell combinations with 2 cells, i.e., three cell combinations: (cell#1, cell#2), (cell#1, cell#3), and (cell#2, cell#3). A carrier indication value of 2 corresponds to a cell combination with 3 cells, i.e., the cell combination: (cell#1, cell#2, cell#3). In this way, the terminal may select several cell combinations from the cell combinations that are capable of being scheduled based on the number of cells corresponding to the first carrier indication value, and further determine the at least one actually scheduled cell based on the 2-bit scheduled cell indication signaling.

Exemplarily, the correspondence among carrier indication values, scheduled cell indication signaling, and actually scheduled cells is shown in Table 1.

**Table 1**

| *n_{CI}* | First signaling/CIF | Actually scheduled cell(s) |
|---|---|---|
| 0 | 00 | (cell#1) |
| | 01 | (cell#2) |
| | 10 | (cell#3) |
| 1 | 00 | (cell#1, cell#2) |
| | 01 | (cell#1, cell#3) |
| | 10 | (cell#2, cell#3) |
| 2 | 00 | (cell#1, cell#2, cell#3) |

In the scheme 3, the carrier indication value is determined based on the number of actually scheduled cells, and further divisions of time-frequency resources are fewer. Compared with the scheme 1, the scheme 3 may utilize time-frequency resources more flexibly. Compared with the scheme 2, the scheme 3 may avoid the problem that the number of PDCCH candidates and the number of non-overlapping CCEs are limited. Furthermore, the manner of determining the at least one actually scheduled cell based on the carrier indication value and the scheduled cell indication signaling may effectively reduce the size of the indication field information and save control overhead.

It should be noted that for the above schemes 2 and 3, after the terminal accesses the base station and before the base station transmits the first DCI to the terminal, the base station needs to transmit the mapping relationship between different carrier indication values and different cell combinations to the terminal. Furthermore, for the scheme 3, the base station needs to transmit the one-to-one mapping relationship among different CIF values, different carrier indication values, and different cell combinations to the terminal. After receiving the first carrier indication value, the terminal may determine the cell combination actually scheduled by the first DCI based on the mapping relationship transmitted by the base station.

Correspondingly, an embodiment of the disclosure further provides a method for channel monitoring, applied to a network device, such as the next generation node B (gNB) and other base stations. As shown in FIG. 2, the method includes the following operation 201.

At operation 201, at least one carrier indication value is configured.

Herein the at least one carrier indication value is configured to determine indexes of control channel elements (CCEs) occupied by physical downlink control channel (PDCCH) candidates corresponding to first downlink control information (DCI); and the first DCI represents DCI that is capable of simultaneously scheduling uplink and/or downlink channels for at least two cells.

In an embodiment, the operation of configuring the at least one carrier indication value includes the following operation.

A first carrier indication value is configured for any cell combination that the first DCI is capable of scheduling.

In an embodiment, the operation of configuring the at least one carrier indication value includes the following operation.

A first parameter set is configured.

Herein the first parameter set includes at least two different carrier indication values, and each of the at least two different carrier indication values corresponds to at least one cell combination that the first DCI is capable of scheduling.

In an embodiment, each carrier indication value in the first parameter set corresponds to at least two cell combinations that the first DCI is capable of scheduling, and cell combinations corresponding to a same carrier indication value have a same number of cells.

The related description of the method for channel monitoring on the network device side may refer to the embodiments of the method for channel monitoring on the terminal side described above, which is not repeated herein.

The embodiments described above may effectively calculate indexes of CCEs in cross-carrier scheduling scenarios, thereby determining time-frequency resources occupied by PDCCH candidates for multiple cells scheduled simultaneously by DCI without the need for a new CIF or dynamic indication information. Furthermore, the above embodiments provide three specific configuration schemes that may be applied based on specific scenarios. For example, when single DCI may schedule a large number of cells, the configuration scheme of scheme 1 may be selected to avoid high complexity in calculating indexes of CCEs. In order to minimize the occupation of overlapping CCEs, the configuration scheme of scheme 2 may be selected to achieve flexible utilization of time-frequency resources. Further, the configuration scheme of scheme 3 may be selected to balance the flexible utilization of time-frequency resources and the reduction of computational complexity, and the configuration scheme of scheme 3 combines carrier indication values and scheduled cell indication signaling to determine the at least one actually scheduled cell, which may effectively reduce the size of indication field information and save control overhead.

In order to implement the method for channel monitoring on the terminal side in the embodiments of the disclosure, an embodiment of the disclosure not covered by the present invention further provides an apparatus for channel monitoring, which is configured on a terminal. As shown in FIG. 3, the apparatus includes a first determining unit 301.

The first determining unit 301 is configured to determine, based on a first carrier indication value, indexes of control channel elements (CCEs) occupied by physical downlink control channel (PDCCH) candidates corresponding to first downlink control information (DCI).

Herein the first DCI represents DCI that is capable of simultaneously scheduling uplink and/or downlink channels for at least two cells; the first carrier indication value represents a carrier indication value configured for a first cell combination by a network device; and the first cell combination is a cell combination scheduled by the first DCI.

In an embodiment not covered by the present invention, any cell combination that the first DCI is capable of scheduling is configured with the first carrier indication value.

In an embodiment not covered by the present invention, the first carrier indication value is determined from a first parameter set.

Herein the first parameter set includes at least two different carrier indication values configured by the network device.

In an embodiment not covered by the present invention, each carrier indication value in the first parameter set corresponds to a respective cell combination that the first DCI is capable of scheduling.

In an embodiment not covered by the present invention, each carrier indication value in the first parameter set corresponds to at least two cell combinations that the first DCI is capable of scheduling, and cell combinations configured with a same carrier indication value have a same number of cells.

In an embodiment not covered by the present invention, the apparatus further includes a second determining unit.

The second determining unit is configured to determine, based on a carrier indicator field (CIF) or first signaling, the first cell combination from at least two cell combinations configured with the first carrier indication value.

Herein the first signaling is configured to indicate at least one scheduled cell.

In practical applications, the first determining unit 301 and the second determining unit may be implemented by processors in the apparatus for channel monitoring.

In order to implement the method for channel monitoring on the network device side in the embodiments of the disclosure, an embodiment of the disclosure not covered by the present invention further provides an apparatus for channel monitoring, which is configured on a network device. As shown in FIG. 4, the apparatus includes a first configuring unit 401.

The first configuring unit 401 is configured to configure at least one carrier indication value.

Herein the at least one carrier indication value is configured to determine indexes of control channel elements (CCEs) occupied by physical downlink control channel (PDCCH) candidates corresponding to first downlink control information (DCI); and the first DCI represents DCI that is capable of simultaneously scheduling uplink and/or downlink channels for at least two cells.

In an embodiment not covered by the present invention, the first configuring unit 401 is configured to:

Configure, for any cell combination that the first DCI is capable of scheduling, a first carrier indication value.

In an embodiment not covered by the present invention, the first configuring unit 401 is configured to:

Configure a first parameter set.

Herein the first parameter set includes at least two different carrier indication values, and each of the at least two different carrier indication values corresponds to at least one cell combination that the first DCI is capable of scheduling.

In an embodiment not covered by the present invention, each carrier indication value in the first parameter set corresponds to at least two cell combinations that the first DCI is capable of scheduling, and cell combinations corresponding to a same carrier indication value have a same number of cells.

In practical applications, the first configuring unit 401 may be implemented by a processor in the apparatus for channel monitoring.

It should be noted that the apparatus for channel monitoring provided in the above embodiments not covered by the present invention is illustrated only using the division of the program modules as examples when performing channel monitoring. In practical applications, the above processing may be assigned to different program modules as needed, that is, the internal structure of the apparatus may be divided into different program modules to complete all or part of the processing described above. Furthermore, the apparatus for channel monitoring provided in the above embodiments not covered by the present invention belongs to the same concept as the method embodiments for channel monitoring, and the specific implementation process is detailed in the method embodiments, which is not repeated herein.

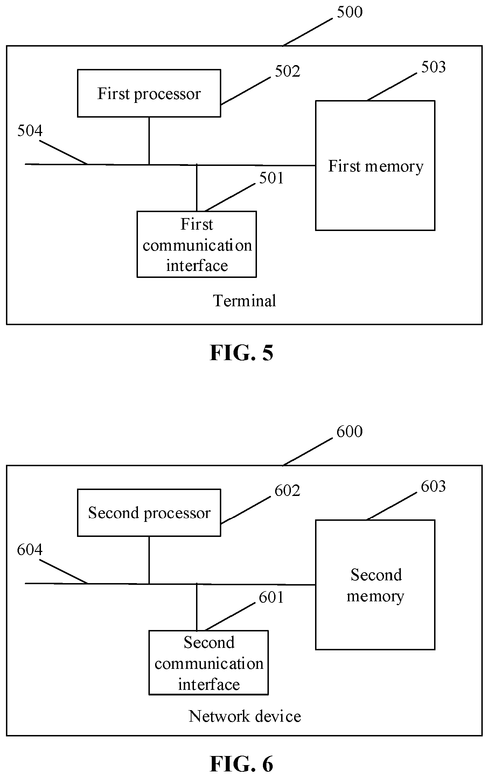

Based on the hardware implementation of the above program modules, and in order to implement the method on the terminal side in the embodiments of the disclosure, an embodiment of the disclosure further provides a terminal. As shown in FIG. 5, a terminal 500 includes a first communication interface 501 and a first processor 502.

The first communication interface 501 is capable of exchanging information with other network nodes.

The first processor 502 is connected to the first communication interface 501 to achieve information exchange with other network nodes. The first processor 502 is configured to execute, when running a computer program, the method provided by one or more technical solutions on the terminal side. Herein the computer program is stored on a first memory 503.

Specifically, the first processor 502 is configured to determine, based on a first carrier indication value, indexes of control channel elements (CCEs) occupied by physical downlink control channel (PDCCH) candidates corresponding to first downlink control information (DCI).

Herein the first DCI represents DCI that is capable of simultaneously scheduling uplink and/or downlink channels for at least two cells; the first carrier indication value represents a carrier indication value configured for a first cell combination by a network device; and the first cell combination is a cell combination scheduled by the first DCI.

In an embodiment, any cell combination that the first DCI is capable of scheduling is configured with the first carrier indication value.

In an embodiment, the first carrier indication value is determined from a first parameter set.

Herein the first parameter set includes at least two different carrier indication values configured by the network device.

In an embodiment, each carrier indication value in the first parameter set corresponds to a respective cell combination that the first DCI is capable of scheduling.

In an embodiment, each carrier indication value in the first parameter set corresponds to at least two cell combinations that the first DCI is capable of scheduling, and cell combinations configured with a same carrier indication value have a same number of cells.

In an embodiment, the first processor 502 is further configured to:

Determine, based on a carrier indicator field (CIF) or first signaling, the first cell combination from at least two cell combinations configured with the first carrier indication value.

Herein the first signaling is configured to indicate at least one scheduled cell.

It should be noted that the specific processing processes of the first processor 502 and the first communication interface 501 may be understood with reference to the above method.

Of course, in practical applications, the various components in the terminal 500 are coupled together through a bus system 504. It may be understood that the bus system 504 is configured to achieve connection communication between these components. The bus system 504 includes not only a data bus, but also a power bus, a control bus, and a state signal bus. However, for the sake of clarity, various buses are labeled collectively as the bus system 504 in FIG. 5.

The first memory 503 in the embodiment of the disclosure is configured to store various types of data to support the operations of the terminal 500. Examples of such data include any computer program for operating on the terminal 500.

The method disclosed in the above embodiments of the disclosure may be applied to or implemented by the first processor 502. The first processor 502 may be an integrated circuit chip with signal processing capabilities. In the implementation process, each operation of the above method may be completed through a hardware integrated logic circuit in the first processor 502 or an instruction in software form. The first processor 502 may be a general-purpose processor, a digital signal processor (DSP), or other programmable logic device, a discrete gate or a transistor logic device, a discrete hardware component, etc. The first processor 502 may implement or execute the various methods, operations, and logical block diagrams disclosed in the embodiments of the disclosure. The general-purpose processor may be a microprocessor or any conventional processor, etc. The operations of the methods disclosed in the embodiments of the disclosure may be directly embodied as being executed by a hardware decoding processor, or as being executed by a combination of hardware and software modules in a decoding processor. The software module may be located in a storage medium, which is located in the first memory 503. The first processor 502 reads information in the first memory 503 and implements the operations of the aforementioned method in combination with the hardware of the first processor 502.

In an exemplary embodiment, the terminal 500 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic components for performing the aforementioned method.

Based on the hardware implementation of the above program modules, and in order to implement the method on the network device side in the embodiments of the disclosure, an embodiment of the disclosure further provides a network device. As shown in FIG. 6, a network device 600 includes a second communication interface 601 and a second processor 602.

The second communication interface 601 is capable of exchanging information with other network nodes.

The second processor 602 is connected to the second communication interface 601 to achieve information exchange with other network nodes. The second processor 602 is configured to execute, when running a computer program, the method provided by one or more technical solutions on the network device side. Herein the computer program is stored on a second memory 603.

Specifically, the second processor 602 is configured to:
Configure at least one carrier indication value.

Herein the at least one carrier indication value is configured to determine indexes of control channel elements (CCEs) occupied by physical downlink control channel (PDCCH) candidates corresponding to first downlink control information (DCI); and the first DCI represents DCI that is capable of simultaneously scheduling uplink and/or downlink channels for at least two cells.

In an embodiment, the second processor 602 is specifically configured to:
Configure, for any cell combination that the first DCI is capable of scheduling, a first carrier indication value.

In an embodiment, the second processor 602 is specifically configured to:
Configure a first parameter set.

Herein the first parameter set includes at least two different carrier indication values, and each of the at least two different carrier indication values corresponds to at least one cell combination that the first DCI is capable of scheduling.

In an embodiment, each carrier indication value in the first parameter set corresponds to at least two cell combinations that the first DCI is capable of scheduling, and cell combinations corresponding to a same carrier indication value have a same number of cells.

It should be noted that the specific processing processes of the second processor 602 and the second communication interface 601 may be understood with reference to the above method.

Of course, in practical applications, the various components in the network device 600 are coupled together through a bus system 604. It may be understood that the bus system 604 is configured to achieve connection communication between these components. The bus system 604 includes not only a data bus, but also a power bus, a control bus, and a state signal bus. However, for the sake of clarity, various buses are labeled collectively as the bus system 604 in FIG. 6.

The second memory 603 in the embodiment of the disclosure is configured to store various types of data to support the operations of the network device 600. Examples of such data include any computer program for operating on the network device 600.

The method disclosed in the above embodiments of the disclosure may be applied to or implemented by the second processor 602. The second processor 602 may be an integrated circuit chip with signal processing capabilities. In the implementation process, each operation of the above method may be completed through a hardware integrated logic circuit in the second processor 602 or an instruction in software form. The second processor 602 may be a general-purpose processor, a DSP, or other programmable logic device, a discrete gate or a transistor logic device, a discrete hardware component, etc. The second processor 602 may implement or execute the various methods, operations, and logical block diagrams disclosed in the embodiments of the disclosure. The general-purpose processor may be a microprocessor or any conventional processor, etc. The operations of the methods disclosed in the embodiments of the disclosure may be directly embodied as being executed by a hardware decoding processor, or as being executed by a combination of hardware and software modules in a decoding processor. The software module may be located in a storage medium, which is located in the second memory 603. The second processor 602 reads information in the second memory 603 and implements the operations of the aforementioned method in combination with the hardware of the second processor 602.

In an exemplary embodiment, the network device 600 may be implemented by one or more ASICs, DSPs, PLDs, CPLDs, FPGAs, general-purpose processors, controllers, MCUs, microprocessors, or other electronic components for performing the aforementioned method.

It may be understood that the memory (the first memory 503, the second memory 603) in the embodiments of the disclosure may be a transitory memory or a non-transitory memory, and may include both the transitory memory and the non-transitory memory. Herein the non-transitory memory may be a read only memory (ROM), a programmable read-only memory (PROM), an erasable PROM (EPROM), an electrically EPROM (EEPROM), a ferromagnetic random access memory (FRAM), a flash memory, a magnetic surface memory, an optical disc, or a compact disc read-only memory (CD-ROM). The magnetic surface memory may be a magnetic disk memory or a magnetic tape memory. The transitory memory may be a random access memory (RAM), which serves as an external cache. By way of example but not limitation, many forms of RAM are available, such as static RAM (SRAM), synchronous SRAM (SSRAM), dynamic RAM (DRAM), synchronous DRAM (SDRAM), double data rate SDRAM (DDRSDRAM), enhanced SDRAM (ESDRAM), synclink DRAM (SLDRAM), and direct rambus RAM (DRRAM). The memory described in the embodiments of the disclosure is intended to include, but is not limited to, these and any other suitable types of memory.

In an exemplary embodiment, an embodiment of the disclosure further provides a storage medium, i.e., a computer storage medium, specifically a computer-readable storage medium. For example, the storage medium includes the first memory 503 storing a computer program, which may be executed by the first processor 502 of the terminal 500 to perform the operations of the described method on the terminal side. For another example, the storage medium includes the second memory 603 storing a computer program, which may be executed by the second processor 602 of the network device 600 to perform the operations of the described method on the network device side. The computer-readable storage medium may be a memory such as a FRAM, a ROM, a PROM, an EPROM, an EEPROM, a flash memory, a magnetic surface memory, an optical disc, or a CD-ROM.

It should be noted that terms "first", "second" and the like are used to distinguish similar objects, and do not necessarily describe a particular order or sequence.

In the disclosure, a term "and/or" is only an association relationship describing associated objects, and indicates that there may be three relationships. For example, A and/or B may indicate three cases: existence of A alone, existence of A and B simultaneously, and existence of B alone. Furthermore, a term "at least one" in the disclosure indicates any one from multiple elements or any combination of at least two from multiple elements. For example, including at least one of A, B, or C may indicate including any one or more elements selected from a set including A, B, and C.

Furthermore, the technical solutions described in the embodiments of the disclosure may be combined arbitrarily without conflict.

The scope of protection of the invention is limited by the appended claims.

## Claims

1. A method for channel monitoring, applied to a terminal, and comprising:
determining (101), based on a first carrier indication value, indexes of control channel elements, CCEs, occupied by physical downlink control channel, PDCCH, candidates corresponding to first downlink control information, DCI;
wherein the first DCI represents DCI that is capable of simultaneously scheduling uplink and/or downlink channels for at least two cells; the first carrier indication value represents a carrier indication value configured for a first cell combination by a network device; and the first cell combination is a cell combination scheduled by the first DCI;
wherein the first carrier indication value is determined from a first parameter set;
wherein the first parameter set comprises at least two different carrier indication values configured by the network device, and
**characterized in that**, each carrier indication value in the first parameter set corresponds to at least two cell combinations that the first DCI is capable of scheduling, and different cell combinations configured with a same carrier indication value have a same number of cells.

2. The method of claim 1, wherein any cell combination that the first DCI is capable of scheduling is configured with the first carrier indication value.

3. The method of claim 1, wherein each carrier indication value in the first parameter set corresponds to a respective cell combination that the first DCI is capable of scheduling.

4. The method of claim 1, further comprising:
determining, based on a carrier indicator field, CIF, or first signaling, the first cell combination from at least two cell combinations configured with the first carrier indication value;
wherein the first signaling is configured to indicate at least one scheduled cell.

5. A method for channel monitoring, applied to a network device, and comprising:
configuring (201) at least one carrier indication value;
wherein the at least one carrier indication value is configured to determine indexes of control channel elements, CCEs, occupied by physical downlink control channel, PDCCH, candidates corresponding to first downlink control information, DCI; and the first DCI represents DCI that is capable of simultaneously scheduling uplink and/or downlink channels for at least two cells;
wherein configuring the at least one carrier indication value comprises: configuring a first parameter set;
wherein the first parameter set comprises at least two different carrier indication values, and each of the at least two different carrier indication values corresponds to at least one cell combination that the first DCI is capable of scheduling; and
**characterized in that**, each carrier indication value in the first parameter set corresponds to at least two cell combinations that the first DCI is capable of scheduling, and different cell combinations corresponding to a same carrier indication value have a same number of cells.

6. The method of claim 5, wherein configuring the at least one carrier indication value comprises:
configuring, for any cell combination that the first DCI is capable of scheduling, a first carrier indication value.

7. A terminal (500), comprising a first processor (502) and a first memory (503) configured to store a computer program capable of running on the first processor (502),
wherein the first processor (502) is configured to execute, when running the computer program, the operations of the method of any one of claims 1 to 4.

8. A network device (600), comprising a second processor (602) and a second memory (603) configured to store a computer program capable of running on the second processor (602),
wherein the second processor (602) is configured to execute, when running the computer program, the operations of the method of any one of claims 5 to 6.

9. A storage medium, having stored thereon a computer program, and the computer program, when executed by a processor, implementing the operations of the method of any one of claims 1 to 4, or implementing the operations of the method of any one of claims 5 to 6.

## Patentansprüche

1. Verfahren zum Kanalüberwachen, das auf ein Endgerät angewendet wird und umfassend:
Bestimmen (101), basierend auf einem ersten Trägeranzeigewert, von Indizes von Steuerkanalelementen, CCEs, die durch physikalische Downlink-Steuerkanalkandidaten, PDCCH-Kandidaten, belegt sind, die ersten Downlink-Steuerinformationen, DCI, entsprechen;
wobei die ersten DCI DCI darstellen, die zu einer gleichzeitigen Planung von Uplink- und/oder Downlink-Kanälen für mindestens zwei Zellen in der Lage sind; der erste Trägeranzeigewert einen Trägeranzeigewert darstellt, der durch eine Netzwerkvorrichtung für eine erste Zellkombination konfiguriert ist; und die erste Zellkombination eine Zellkombination ist, die durch die ersten DCI geplant wird;
wobei der erste Trägeranzeigewert aus einem ersten Parametersatz bestimmt wird;
wobei der erste Parametersatz mindestens zwei unterschiedliche Trägeranzeigewerte umfasst, die durch die Netzwerkvorrichtung konfiguriert sind, und
**dadurch gekennzeichnet, dass** jeder Trägeranzeigewert in dem ersten Parametersatz mindestens zwei Zellkombinationen entspricht, zu deren Planung die ersten DCI in der Lage sind, und unterschiedliche Zellkombinationen, die mit einem gleichen Trägeranzeigewert konfiguriert sind, eine gleiche Anzahl von Zellen aufweisen.

2. Verfahren nach Anspruch 1, wobei eine beliebige Zellkombination, zu deren Planung die ersten DCI in der Lage sind, mit dem ersten Trägeranzeigewert konfiguriert ist.

3. Verfahren nach Anspruch 1, wobei jeder Trägeranzeigewert in dem ersten Parametersatz einer jeweiligen Zellkombination entspricht, zu deren Planung die ersten DCI in der Lage sind.

4. Verfahren nach Anspruch 1, ferner umfassend:
Bestimmen, basierend auf einem Trägeranzeigerfeld, CIF, oder einem ersten Signalisieren, der ersten Zellkombination aus mindestens zwei Zellkombinationen, die mit dem ersten Trägeranzeigewert konfiguriert sind;
wobei das erste Signalisieren konfiguriert ist, um mindestens eine geplante Zelle anzuzeigen.

5. Verfahren zum Kanalüberwachen, das auf eine Netzwerkvorrichtung angewendet wird und umfassend:
Konfigurieren (201) mindestens eines Trägeranzeigewerts;
wobei der mindestens eine Trägeranzeigewert konfiguriert ist, um Indizes von Steuerkanalelementen, CCEs, zu bestimmen, die durch physikalische Downlink-Steuerkanalkandidaten, PDCCH-Kandidaten, belegt sind, die ersten Downlink-Steuerinformationen, DCI, entsprechen; und die ersten DCI DCI darstellen, die zu der gleichzeitigen Planung von Uplink- und/oder Downlink-Kanälen für mindestens zwei Zellen in der Lage sind;
wobei das Konfigurieren des mindestens einen Trägeranzeigewerts umfasst: Konfigurieren eines ersten Parametersatzes;
wobei der erste Parametersatz mindestens zwei unterschiedliche Trägeranzeigewerte umfasst und jeder der mindestens zwei unterschiedlichen Trägeranzeigewerte mindestens einer Zellkombination entspricht, zu deren Planung die ersten DCI in der Lage sind; und
**dadurch gekennzeichnet, dass** jeder Trägeranzeigewert in dem ersten Parametersatz mindestens zwei Zellkombinationen entspricht, zu deren Planung die ersten DCI in der Lage sind, und unterschiedliche Zellkombinationen, die einem gleichen Trägeranzeigewert entsprechen, eine gleiche Anzahl von Zellen aufweisen.

6. Verfahren nach Anspruch 5, wobei das Konfigurieren des mindestens einen Trägeranzeigewerts umfasst:
Konfigurieren, für eine beliebige Zellkombination, zu deren Planung die ersten DCI in der Lage sind, eines ersten Trägeranzeigewerts.

7. Endgerät (500), umfassend einen ersten Prozessor (502) und einen ersten Speicher (503), der konfiguriert ist, um ein Computerprogramm zu speichern, das zum Ablaufen auf dem ersten Prozessor (502) in der Lage ist,
wobei der erste Prozessor (502) konfiguriert ist, um, wenn das Computerprogramm abläuft, die Vorgänge des Verfahrens nach einem der Ansprüche 1 bis 4 auszuführen.

8. Netzwerkvorrichtung (600), umfassend einen zweiten Prozessor (602) und einen zweiten Speicher (603), der konfiguriert ist, um ein Computerprogramm zu speichern, das zum Ablaufen auf dem zweiten Prozessor (602) in der Lage ist,
wobei der zweite Prozessor (602) konfiguriert ist, um, wenn das Computerprogramm abläuft, die Vorgänge des Verfahrens nach einem der Ansprüche 5 bis 6 auszuführen.

9. Speicherungsmedium, das ein darauf gespeichertes Computerprogramm aufweist, und wobei das Computerprogramm, wenn es durch einen Prozessor ausgeführt wird, die Vorgänge des Verfahrens nach einem der Ansprüche 1 bis 4 implementiert oder die Vorgänge des Verfahrens nach einem der Ansprüche 5 bis 6 implementiert.

## Revendications

1. Procédé permettant une surveillance de canal, appliqué à un terminal et comprenant :
la détermination (101), sur la base d'une première valeur d'indication de porteuse, d'indices d'éléments de canal de commande, CCE, occupés par des candidats de canal de commande de liaison descendante physique, PDCCH, correspondant à de premières informations de commande de liaison descendante, DCI ;
dans lequel les premières DCI représentent des DCI qui sont capables de planifier simultanément des canaux de liaison montante et/ou de liaison descendante pour au moins deux cellules ; la première valeur d'indication de porteuse représente une valeur d'indication de porteuse configurée pour une première combinaison de cellules par un dispositif de réseau ; et la première combinaison de cellules est une combinaison de cellules planifiée par les premières DCI ;
dans lequel la première valeur d'indication de porteuse est déterminée à partir d'un premier ensemble de paramètres ;
dans lequel le premier ensemble de paramètres comprend au moins deux valeurs d'indication de porteuse différentes configurées par le dispositif de réseau, et
**caractérisé en ce que**, chaque valeur d'indication de porteuse dans le premier ensemble de paramètres correspond à au moins deux combinaisons de cellules que les premières DCI sont capables de planifier, et différentes combinaisons de cellules configurées avec une même valeur d'indication de porteuse ont un même nombre de cellules.

2. Procédé selon la revendication 1, dans lequel toute combinaison de cellules que les premières DCI sont capable de planifier est configurée avec la première valeur d'indication de porteuse.

3. Procédé selon la revendication 1, dans lequel chaque valeur d'indication de porteuse dans le premier ensemble de paramètres correspond à une combinaison de cellules respective que les premières DCI sont capables de planifier.

4. Procédé selon la revendication 1, comprenant en outre :
la détermination, sur la base d'un champ d'indicateur de porteuse, CIF, ou d'une première signalisation, de la première combinaison de cellules parmi au moins deux combinaisons de cellules configurées avec la première valeur d'indication de porteuse ;
dans lequel la première signalisation est configurée pour indiquer au moins une cellule planifiée.

5. Procédé permettant une surveillance de canal, appliqué à un dispositif de réseau, et comprenant :
la configuration (201) d'au moins une valeur d'indication de porteuse ;
dans lequel l'au moins une valeur d'indication de porteuse est configurée pour déterminer des indices d'éléments de canal de commande, CCE, occupés par des candidats de canal de commande de liaison descendante physique, PDCCH, correspondant à des premières informations de commande de liaison descendante, DCI ; et les premières DCI représentent des DCI qui sont capables de planifier simultanément des canaux de liaison montante et/ou de liaison descendante pour au moins deux cellules ;
dans lequel la configuration de l'au moins une valeur d'indication de porteuse comprend : la configuration d'un premier ensemble de paramètres ;
dans lequel le premier ensemble de paramètres comprend au moins deux valeurs d'indication de porteuse différentes, et chacune des au moins deux valeurs d'indication de porteuse différentes correspond à au moins une combinaison de cellules que les premières DCI sont capables de planifier ; et
**caractérisé en ce que**, chaque valeur d'indication de porteuse dans le premier ensemble de paramètres correspond à au moins deux combinaisons de cellules que les premières DCI sont capables de planifier, et des combinaisons de cellules différentes correspondant à une même valeur d'indication de porteuse ont un même nombre de cellules.

6. Procédé selon la revendication 5, dans lequel la configuration de l'au moins une valeur d'indication de porteuse comprend :
la configuration, pour toute combinaison de cellules que les premières DCI sont capables de planifier, d'une première valeur d'indication de porteuse.

7. Terminal (500), comprenant un premier processeur (502) et une première mémoire (503) configurée pour stocker un programme informatique capable de s'exécuter sur le premier processeur (502),
dans lequel le premier processeur (502) est configuré pour exécuter, lors d'une exécution du programme informatique, les opérations du procédé selon l'une quelconque des revendications 1 à 4.

8. Dispositif de réseau (600), comprenant un second processeur (602) et une seconde mémoire (603) configurée pour stocker un programme informatique capable de s'exécuter sur le second processeur (602),
dans lequel le second processeur (602) est configuré pour exécuter, lors d'une exécution du programme informatique, les opérations du procédé selon l'une quelconque des revendications 5 à 6.

9. Support de stockage, sur lequel est stocké un programme informatique, et le programme informatique, lorsqu'il est exécuté par un processeur, mettant en œuvre les opérations du procédé selon l'une quelconque des revendications 1 à 4, ou mettant en œuvre les opérations du procédé selon l'une quelconque des revendications 5 à 6.
